# EUROPEAN PATENT APPLICATION

(11) **EP 4 576 025 A1**
(43) Date of publication of application: **25.06.2025**
(21) Application number: 24181940.8
(22) Date of filing: 13.06.2024
(51) Int. Cl.: G06V 30/10, H04N 1/00, G06V 10/94

(54) **READING DEVICE, LABEL DISPENSING DEVICE, AND INFORMATION PROCESSING METHOD**

(30) Priority: 22.12.2023 JP 2023217213
(71) Applicant: Toshiba TEC Kabushiki Kaisha, Tokyo 141-8562 (JP)
(72) Inventor: Terada, Tomoki, Tokyo, 141-8562 (JP)
(74) Representative: Hoffmann Eitle

(57) **Abstract**

A technique for facilitating label dispensing is provided. A reading device includes a scanner section, a character recognition unit, and an output unit are provided. The scanner section reads an image on a medium. The character recognition unit recognizes character information from a target area of the image on the medium read by the scanner section. The output unit outputs information in which information capable of identifying the target area is associated with information based on the character information.

## Description

### CROSS-REFERENCE TO RELATED APPLICATION

This application is based upon and claims the benefit of priority from Japanese Patent Application No. 2023-217213, filed on December 22, 2023, the entire contents of which are incorporated herein by reference.

### FIELD

Embodiments described herein relate generally to a reading device, a label dispensing device, and an information processing method.

### BACKGROUND

In the related art, in a bar code printer or a label printer, there was a mechanism in which, based on input data input from a device such as a bar code reader or a weighing instrument connected to the printer, input data is inserted into template data stored in the printer in advance, and a bar code or a label is printed.

However, in such a bar code printer or a label printer, when printing is performed based on the input data, work of a user such as work of reading a bar code or an input operation of a measurement result is required each time. Further, as the number of items for inputting data to be printed on the label increases, the amount of required work performed by the user tends to increase.

### SUMMARY OF THE INVENTION

One of the objects of the present invention is to improve prior art techniques and overcome at least some of the prior art problems as for instance above illustrated.

According to a first aspect of the present invention, it is provided a reading device comprising a scanner configured to read an image on a medium; a processor configured to perform character recognition to recognize character information from a target area of the image of the medium read by the scanner; and output information, the output information including information identifying the target area and information based on the character information associated with each other.

Optionally, the device according to the first aspect of the invention further comprises a storage configured to store a template in which the information identifying the target area and the information related to the target area are associated with each other.

According to a second aspect of the invention, it is provided a label dispensing device comprising a processor configured to acquire, from a reader, information including information based on character information and information identifying a target area of an image on a medium corresponding to the character information associated with each other; register label element information based on the character information corresponding to a label element; and create a label based on the registered label element information.

Optionally, the device according to the second aspect of the invention further comprises a storage configured to store a label format in which the label element and information identifying the target area are associated with each other.

Optionally, the information processing method according to the second aspect comprises recognizing character information from a target area of an image on a medium read by a scanner; and outputting information identifying the target area and information based on the character information.

According to a third aspect of the invention, it is provided an information processing method acquiring, from a reader, information including information based on character information associated with information identifying a target area of an image on a medium corresponding to the character information; registering the information based on the character information corresponding to a label element; and creating a label based on the registered information.

According to a fourth aspect of the invention, it is provided a reading device comprising a scanner configured to read an image on a medium; and a processor configured to acquire information indicating a target area of the image on the medium; recognize character information from the target area of the image on the medium read by the scanner; and an output configured to output information based on the character information of the target area.

Optionally, in the device according to the first or other above aspects of the invention, the reading device includes a multifuction peripheral.

Optionally, in the device according to the first or other above aspects of the invention, the scanner includes a line sensor.

Optionally, in the device according to the first or other above aspects of the invention, the information based on the character information includes numerical values.

Optionally, in the device according to the first, second or other above aspects of the invention, the storages includes at least one of a hard disk drive or a solid state drive.

Optionally, in the device according to the second aspect of the invention, the label creation section includes a label dispenser.

Optionally, in the device according to the second aspect of the invention or its optional features, the label format includes format identification information.

### DESCRIPTION OF THE DRAWINGS

FIG. 1 is a block diagram schematically showing a label dispensing system according to at least one embodiment;
FIG. 2 is a block diagram schematically showing a configuration example of an image reading device;
FIG. 3 is a block diagram schematically showing a configuration example of a label printer;
FIG. 4 is a diagram showing an example of a template;
FIG. 5 is a diagram showing an example of a label format;
FIG. 6 is a sequence diagram showing an example of a processing procedure of information processing by the label dispensing system;
FIG. 7 is a diagram showing an example of a processing procedure of key event generation processing by the label printer;
FIG. 8 is a block diagram showing an example of connection of the label dispensing system;
FIG. 9 is a block diagram showing another example of the connection; and
FIG. 10 is a block diagram showing a modification of the label dispensing system.

### DETAILED DESCRIPTION

In general, according to at least one embodiment, a technique for facilitating label dispensing is provided.

A reading device in an embodiment includes a scanner section (scanner), a character recognition unit (character recognition processor), and an output unit (output). The scanner section reads an image on a medium. The character recognition unit recognizes character information from a target area of the image on the medium read by the scanner section. The output unit outputs information in which information capable of identifying the target area is associated with information based on the character information.

Hereinafter, at least one embodiment will be described with reference to the drawings. In the drawings, the same components are denoted by the same reference signs as much as possible, and a redundant description thereof will be omitted.

### Configuration Example

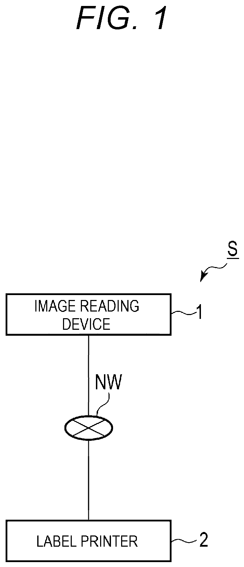

FIG. 1 is a block diagram showing a label dispensing system S according to the embodiment.

The label dispensing system S includes an image reading device 1 and a label printer 2. The image reading device 1 and the label printer 2 are communicably connected to each other via a network NW. The network NW includes one or more networks such as the Internet, a mobile network, and a local area network (LAN). The network may include a wireless network or a wired network. The label dispensing system S is a system that dispenses a label in the label printer 2 based on information read by the image reading device 1. The label dispensing system S may include a plurality of image reading devices 1. The label dispensing system S may include a plurality of label printers 2. The label dispensing system S may refer to a system including at least two electronic devices.

The image reading device 1 is an electronic device having an electrophotographic printing function. The image reading device 1 is described as a multifunction peripheral (MFP) having a copy function, a printing function, a facsimile function, a scanner function, and the like. The image reading device 1 is an example of a reading device. A configuration example of the image reading device 1 will be described later.

The label printer 2 is an electronic device having a printing function. Printing includes printing not only characters but also various images such as patterns. The label printer 2 is an example of a label dispensing device (dispenser). A configuration example of the label printer 2 will be described later.

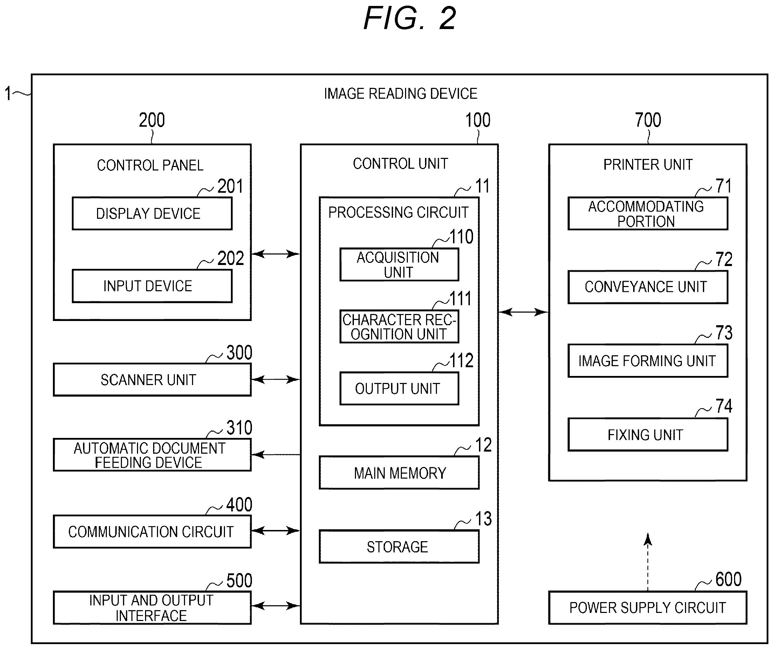

FIG. 2 is a block diagram schematically showing a configuration example of the image reading device 1 according to at least one embodiment.

The image reading device 1 is an electronic device having an electrophotographic printing function. The image reading device 1 is described as the MFP having the copy function, the printing function, the facsimile function, the scanner function, and the like. The image reading device 1 has an optical character recognition (OCR) function of performing character recognition on an image.

The image reading device 1 includes a control unit 100, a control panel 200, a scanner unit 300, an automatic document feeding device 310, a communication circuit 400, an input and output interface 500, a power supply circuit 600, and a printer unit 700.

The control unit 100 controls an operation of each unit of the image reading device 1. The control unit 100 includes a processing circuit 11, a main memory 12, and a storage 13.

The processing circuit 11 corresponds to a central part of the image reading device 1. The processing circuit 11 is an element constituting a computer of the image reading device 1. The processing circuit 11 includes one or more circuits that execute a plurality of pieces of processing by a plurality of functions. For example, the circuit is a processor, an application specific integrated circuit (ASIC), or a field-programmable gate array (FPGA), but is not limited thereto. For example, the processor is a central processing unit (CPU) or a graphics processing unit (GPU), but is not limited thereto. The processing circuit 11 loads a program stored in advance in the main memory 12 or the storage 13 into the main memory 12. The program is a program capable of causing the processing circuit 11 to execute various types of processing. The processing circuit 11 executes a program loaded into the main memory 12 to enable execution of various types of processing.

The main memory 12 corresponds to a main storage part of the image reading device 1. The main memory 12 is an element constituting the computer of the image reading device 1. The main memory 12 includes a nonvolatile memory area and a volatile memory area. The main memory 12 stores an operating system or a program in the nonvolatile memory area. The main memory 12 uses the volatile memory area as a work area in which data is appropriately rewritten by the processing circuit 11. For example, the main memory 12 includes a read only memory (ROM) as the nonvolatile memory area. For example, the main memory 12 includes a random access memory (RAM) as the volatile memory area.

The storage 13 corresponds to an auxiliary storage part of the image reading device 1. The storage 13 is an element constituting the computer of the image reading device 1. For example, the storage 13 includes a hard disk drive (HDD). The storage 13 may include a semiconductor storage medium such as a solid state drive (SSD) in addition to or instead of the HDD. The storage 13 stores the above-described program, data used by the processing circuit 11 to perform various types of processing, and data generated by the processing of the processing circuit 11. The storage 13 may store image data generated by the scanner unit 300. The storage 13 is an example of a storage unit.

The storage 13 stores information of at least one template for specifying an area where the character recognition is performed on an image. The template includes m (m being an integer of 1 or more) target areas. The information of the template includes a record in which information such as template identification information, medium information, and target area information is associated with each other. Information of each record is also referred to as template information. The template identification information is identification information capable of uniquely identifying a template. The template identification information is, for example, a name of the template. The medium information includes information such as a size of a medium. The medium is, for example, a sheet made of various materials such as paper. The size of the medium indicates a size of the sheet. The medium information may include information such as the type of the medium and a conveyance direction of the medium. The target area information indicates information related to the target area. The target area indicates an area where character recognition is performed on the image on the medium. The target area is also referred to as a target area of the medium or a target area of the image. The target area information includes target area identification information. The target area identification information is information capable of uniquely identifying the target area. The target area identification information is, for example, a target area name. The target area identification information is an example of information capable of identifying the target area. The target area identification information may include information capable of identifying a template including the target area. The target area information includes information indicating a position and a size of the target area. The position of the target area may be specified by coordinates of the medium. The size of the target area may be specified by a height and width of the target area. The size of the target area may be specified by the coordinates of the medium. A shape of the target area is, for example, a rectangle, but is not limited thereto. The template may include any number of target areas. The template includes information in which the target area information is associated with the target area name. The template may include setting information related to the OCR function. The setting information related to the OCR function may include information such as a language. The template may be appropriately set by a user, an administrator, and the like of the image reading device 1.

A specific example of the template will be described. A template "Ta" includes target areas "area (1)" and "area (2)". The target area "area (1)" is, for example, an area including information corresponding to "product ID", and the target area "area (2)" is, for example, an area including information corresponding to "price". The template "Ta" includes information in which the target area information corresponding to the target areas "area (1)" and "area (2)" is associated with each other. When a user of the image reading device 1 selects the template "Ta", the image reading device 1 performs the character recognition on the images provided in the target areas "area (1)" and "area (2)" of the medium.

The control panel 200 includes a display device 201 and an input device 202.

The display device 201 is a device capable of displaying various images under the control of the processing circuit 11. The display device 201 is a liquid crystal display, an organic electro luminescence (EL), or the like, but is not limited thereto. The input device 202 is a device capable of inputting data or an instruction to the image reading device 1. The input device 202 may include an input button, a touch panel, or the like.

The scanner unit 300 is a device that reads images such as characters, graphics, and photographs drawn on a sheet placed at a predetermined position. The scanner unit 300 includes a line sensor. The line sensor may be a charge coupled device (CCD) system. The line sensor may be a contact image sensor (CIS) system. The scanner unit 300 generates image data based on an image read using the line sensor. The scanner unit 300 transmits the generated image data to the control unit 100. The control unit 100 stores the received image data in the storage 13 and transmits the image data to the printer unit 700. The scanner unit 300 is an example of a scanner section.

The automatic document feeding device 310 conveys a medium such as a document to a reading position of the scanner unit 300. The automatic document feeding device 310 includes a tray on which the medium is placed. The automatic document feeding device 310 sequentially conveys the media placed on the tray to the reading position of the scanner unit 300. The automatic document feeding device 310 is also referred to as an automatic document feeder (ADF).

The communication circuit 400 is an interface for communicably connecting the image reading device 1 to the label printer 2 via a wired or wireless network.

The input and output interface 500 is an interface for connecting the image reading device 1 to an external device. The input and output interface 500 includes a connector of a wired cable.

The power supply circuit 600 converts AC power supplied from a commercial power supply into DC power, and supplies power to each unit of the image reading device 1. The power supply circuit 600 may be controlled by the processing circuit 11.

The printer unit 700 is a unit that forms an image on the sheet. The sheet is a member where a plurality of labels are arranged along a longitudinal direction. The plurality of labels are arranged such that intervals between centers of adjacent labels are equal. The image includes an image including character information and a picture image. The printer unit 700 forms an image on the sheet based on image data transmitted from a user terminal via the network by the printing function. The printer unit 700 forms an image on the sheet based on the image data generated by the scanner unit 300 by the copy function. Here, an example of the printer unit 700 using a tandem-type toner image transfer unit will be described. The printer unit 700 includes an accommodating portion 71, a conveyance unit 72, an image forming unit 73, and a fixing unit 74. The printer unit 700 is an example of a printing unit.

The accommodating portion 71 stores sheets. The accommodating portion 71 includes a sheet feeding cassette and a pickup roller. The sheet feeding cassette accommodates the sheets. The pickup roller picks up the sheets one by one from the sheet feeding cassette. The pickup roller supplies the picked-up sheets to the conveyance unit 72. The sheet includes an ID card including a wireless tag.

The conveyance unit 72 conveys the sheets in the printer unit 700. The conveyance unit 72 includes a plurality of rollers and a resist roller. The plurality of rollers include a roller that conveys a sheet supplied by the pickup roller to the resist roller. The plurality of rollers are provided on a downstream side of the fixing unit 74 to be described later, and include a roller that discharges the sheet to a discharge tray. The resist roller conveys the sheet to a transfer portion in accordance with a timing at which the transfer portion of the image forming unit 73 to be described later transfers a toner image to the sheet.

The image forming unit 73 forms the toner image on the sheet. The image forming unit 73 includes an intermediate transfer belt, a plurality of developing units, an exposure unit, a transfer unit, or the like. The intermediate transfer belt is an endless belt. The plurality of developing units correspond to the number of types of toner. The plurality of developing units include a black developing unit, a cyan developing unit, a magenta developing unit, and a yellow developing unit. Each developing unit includes a photosensitive drum. Each developing unit includes a charger, a developing device, a primary transfer roller, a cleaning unit, and a static eliminator around the photosensitive drum. The photosensitive drum is a drum having a photosensitive layer on a surface thereof. The charger uniformly charges the photosensitive layer on the surface of the photosensitive drum. The developing device develops an electrostatic latent image on the surface of the photosensitive drum with toner. The developing device forms a toner image on the surface of the photosensitive drum. The primary transfer roller faces the photosensitive drum and sandwiches the intermediate transfer belt. The primary transfer roller transfers the toner image on the surface of the photosensitive drum onto the intermediate transfer belt. The cleaning unit removes toner not to be transferred on the surface of the photosensitive drum. The static eliminator irradiates the surface of the photosensitive drum with light. The static eliminator removes static electricity from the photosensitive layer of the photosensitive drum by light irradiation. The exposure unit irradiates the surface of the photosensitive drum of each developing unit with laser light via an optical system such as a polygon mirror. The exposure unit forms an electrostatic pattern as an electrostatic latent image on the surface of the photosensitive drum. The transfer unit transfers the charged toner image on the surface of the intermediate transfer belt to the sheet. The transfer unit includes a support roller and a secondary transfer roller configured to sandwich the intermediate transfer belt and the sheet from both sides in a thickness direction.

The fixing unit 74 applies heat and pressure to the sheet on which the toner image supplied from the image forming unit 73 is formed. The fixing unit 74 fixes the toner image formed on the sheet to the sheet by the heat and pressure.

Hardware configuration of the image reading device 1 is not limited to the above-described configuration. In the image reading device 1, the above-described components may be appropriately omitted and changed, and a new component may be added thereto.

Each unit implemented by the processing circuit 11 will be described.

The processing circuit 11 implements an acquisition unit 110, a character recognition unit 111, and an output unit 112. Each unit implemented by the processing circuit 11 can also be referred to as each function. Each unit implemented by the processing circuit 11 can also be implemented by a control unit including the processing circuit 11 and the main memory 12.

The acquisition unit 110 acquires the template information. The acquisition unit 110 may acquire template information of a template selected based on an operation by the user. The acquisition unit 110 acquires image data of an image on a medium read by the scanner unit 300. The acquisition unit 110 acquires the image data of the target area from the image data on the medium based on the template information.

The character recognition unit (processor) 111 acquires character information from the image data provided in the target area acquired by the acquisition unit 110. For example, the character recognition unit 111 performs, for example, character recognition by character recognition processing such as OCR processing from the image data provided in the target area. The character recognition unit 111 may convert the character information into a value such as a numerical value. The character recognition unit 111 may perform key code conversion based on the character information. The character recognition unit 111 may or may not convert the character information according to specifications of the label printer 2. The character recognition unit 111 stores target area identification information and information based on the character information in association with each other in the storage 13. The information based on the character information is character information or information such as a numerical value obtained by converting the character information. The character recognition unit 111 may store the target area identification information and the information based on the character information in the storage 13 in association with the template. For example, a case where the character recognition unit 111 recognizes character information "XXXXX" from the target area "area (1)" of the medium corresponding to the template "Ta" will be described. The character recognition unit 111 may store the target area name "area (1)" and the character information "XXXXX" in association with each other in the storage 13. The character recognition unit 111 may store the target area name "area (1)" and a value obtained by converting the character information "XXXXX" into a key code in association with each other in the storage 13.

The output unit 112 outputs information in which the target area name is associated with the information based on the character information to the label printer 2 via the communication circuit 400. The output unit 112 outputs the target area name and the information based on the character information in association with each other to the label printer 2. For example, the output unit 112 may output the target area name "area (1)" and the character information "XXXXX" in association with each other to the label printer 2. The output unit 112 may output the target area name "area (1)" and the value obtained by converting the character information "XXXXX" into the key code in association with each other to the label printer 2. The output unit 112 may output information capable of identifying the template to the label printer 2.

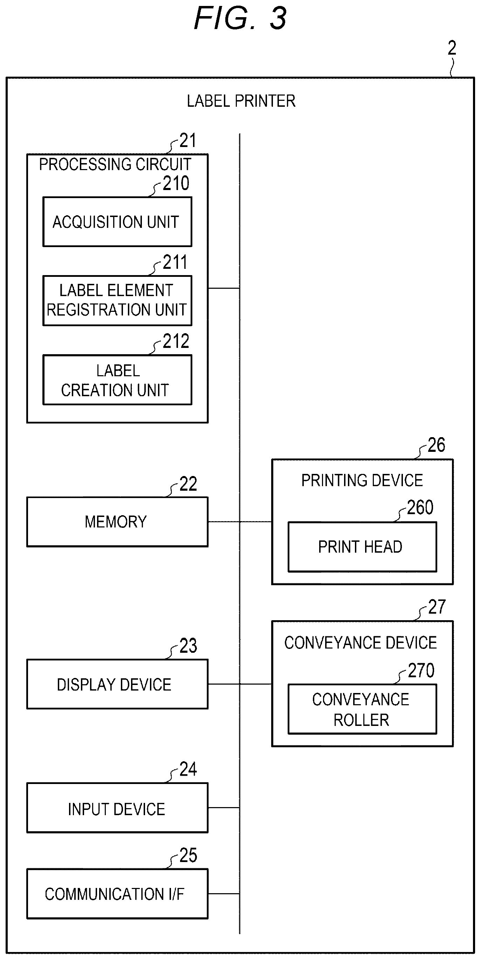

FIG. 3 is a block diagram schematically showing a configuration example of the label printer 2 according to the embodiment.

The label printer 2 is an electronic device having the printing function. Printing includes printing not only characters but also various images such as patterns. The label printer 2 is an example of the label dispensing device. The label is an example of a medium made of various materials such as paper.

The label printer 2 includes a processing circuit 21, a memory 22, a display device 23, an input device 24, a communication interface 25, a printing device 26, and a conveyance device 27. In FIG. 3, the interface is described as "I/F".

The processing circuit 21 corresponds to a central part of the label printer 2. Similar to the processing circuit 11, the processing circuit 21 includes one or more circuits that execute a plurality of pieces of processing by a plurality of functions. The processing circuit 21 loads the program into the memory 22. The processing circuit 21 executes various types of processing by executing the program loaded into the memory 22. The program is a program for causing the processing circuit 21 to execute various types of processing. The processing circuit 21 is an example of a control unit of the label printer 2.

The memory 22 includes elements corresponding to a main storage part of the label printer 2. The memory 22 is an element constituting a computer of the label printer 2. The memory 22 may be configured similarly to the main memory 12. The memory 22 is an example of a storage unit of the label printer 2.

The memory 22 stores information of at least one label format. The label format includes n (n being an integer of 1 or more) label elements. The label format information includes a record in which information such as format identification information and label element information is associated with each other. Information of each record is also referred to as format information. The format identification information is identification information capable of uniquely identifying a format. The format identification information is, for example, a name of the format. The label element information indicates information related to the label element. The label element indicates an item of information printed on the label. The label element is, for example, an element including a product ID, an element including a price, or the like. The label element information includes label element identification information capable of uniquely identifying a label element. The label element identification information is, for example, a name of the label element. The label element information may include information indicating a correspondence relationship between the target area of the template and the label element. The information indicating the correspondence relationship between the target area and the label element is, for example, information in which the target area identification information is associated with the label element identification element. The label element is an element that registers information based on the character information recognized from the target area of the corresponding template. The label format may include information capable of identifying the corresponding template. The label format may be associated with the template. The label format may include any number of label elements. The number of label elements is the same as the number of target areas provided in the template corresponding to the label format. The label format includes information in which a label element name and a target area name are associated with each other. The label format can be appropriately set by a user, an administrator, or the like of the label printer 2. In the following description, "register" may be read as "input".

A specific example of the label format will be described. A label format "Fa" includes label elements "element (a)" and "element (b)". The label element "element (a)" is, for example, an element that registers information corresponding to the "product ID", and the label element "element (b)" is, for example, an element that registers information corresponding to the "price". The label format "Fa" corresponds to the template "Ta". The label format "Fa" may include information capable of identifying the template "Ta" as information of the corresponding template. The label format "Fa" includes information capable of identifying the target area "area (1)" as information of the target area corresponding to the label element "element (a)". The label format "Fa" includes information capable of identifying the target area "area (2)" as information of the target area corresponding to the label element "element (b)". When the label format "Fa" is selected by the user of the label printer 2, the label printer 2 registers information based on the character information recognized from the target areas corresponding to the label elements "element (a)" and "element (b)" in the label elements "element (a)" and "element (b)", respectively.

The memory 22 may store a database. The database includes information associated with the label element. For example, the database may include information associated with the label element "product ID". The database may store price information as information associated with the label element "product ID". In this case, the label printer 2 may read the price information from the database and create a label based on the acquisition of the information corresponding to the label element "product ID".

The display device 23 is a device capable of displaying an image. The display device 23 includes a liquid crystal display or an organic EL display, but is not limited thereto.

The input device 24 is a device capable of inputting an instruction based on an operation by the user. The input device 24 may include a button that can be pressed. The input device 24 may include a touch panel integrated with the display device 23.

The communication interface 25 is an interface for communicably connecting the label printer 2 to the image reading device 1 via the network NW. The communication interface 25 is an example of a communication unit of the label printer 2.

The printing device 26 is a device for printing an image on a label. The printing device 26 includes a print head 260. The printing device 26 is an example of a printing unit that prints an image on a label.

The print head 260 is a head for printing an image on a label. The print head 260 may have a function of printing an image on a label, and a printing method is not limited. When the label has a thermosensitive layer, the print head 260 may print an image on a label having a thermosensitive layer by heat generation of each heating element. The print head 260 may print an image on the label by dissolving ink contained in an ink ribbon by the heat generation of each heating element. The print head 260 may print an image on the label by inkjet.

The conveyance device 27 is a device for conveying sheets. The conveyance device 27 includes a plurality of conveyance rollers 270. The conveyance device 27 is an example of a conveyance unit that conveys the sheets.

The plurality of conveyance rollers 270 convey the sheets. The direction in which the sheets are conveyed is also referred to as a conveyance direction. Conveyance of the sheets includes conveyance of the labels.

Hardware configuration of the label printer 2 is not limited to the above-described configuration. In the label printer 2, it is possible to omit and change the above-described components and add new components as appropriate.

Each unit implemented by the above-described processing circuit 21 will be described.

The processing circuit 21 implements an acquisition unit 210, a label element registration unit 211, and a label creation unit 212. Each unit implemented by the processing circuit 21 may be referred to as each function. Each unit implemented by the processing circuit 21 can also be said to be implemented by the control unit including the processing circuit 21 and the memory 22.

The acquisition unit 210 acquires information based on the character information and the target area name from the image reading device 1 via the communication interface 25. The target area name is an example of information capable of identifying the target area of the medium corresponding to the information based on the character information. The target area corresponding to the information based on the character information is a target area of the medium including the image data corresponding to the recognized character information. For example, in the image reading device 1, a case where information obtained by recognizing the character information from the target area "area (1)" and the target area "area (2)" of the medium corresponding to the template "Ta" is output will be described. The acquisition unit 210 acquires information capable of identifying the target area "area (1)" and the target area "area (2)". The acquisition unit 210 acquires information based on character information associated with each of the target area "area (1)" and the target area "area (2)". The acquisition unit 210 stores the information based on the character information and the target area name in association with each other in the memory 22. The acquisition unit 210 may acquire the information based on the character information from the memory 22 based on a request from the label element registration unit 211.

The label element registration unit 211 registers the information based on the character information corresponding to the label element in the label element. The label element registration unit 211 may request the information based on the character information corresponding to each label element and register the information based on the corresponding character information in the label element.

The label creation unit 212 creates a label based on the information registered by the label element registration unit 211. The label creation unit 212 creates a label in which information based on the character information is registered in the label element based on the label format. The label creation unit 212 outputs label information of the created label to the printing device 26. The printing device 26 performs printing on the label based on the label information.

### Example of Template

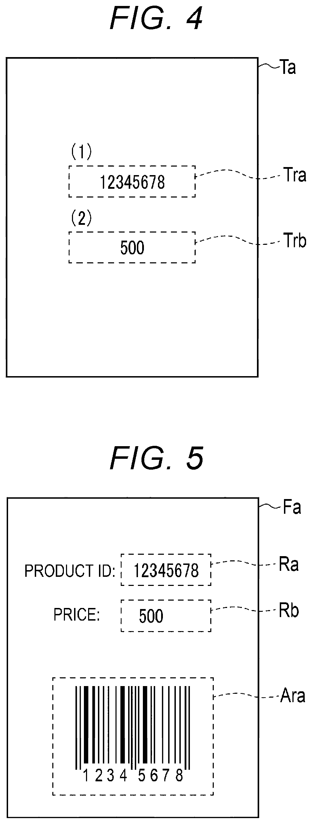

FIG. 4 is a diagram showing an example of the template according to the embodiment.

FIG. 4 shows the template Ta. The template Ta includes target areas Tra and Trb. The template Ta is a template that can be identified by the template name "Ta". The target area Tra is a target area that can be identified by the target area name "area (1)". The target area Trb is a target area that can be identified by the target area name "area (2)". The target area "area (1)" is, for example, an area including the product ID. The target area "area (2)" is, for example, an area including the price.

The template information of the template Ta includes the information capable of identifying the target areas "area (1)" and "area (2)" and the information in which the target area information of the target areas "area (1)" and "area (2)" is associated with each other.

### Example of Label Format

FIG. 5 is a diagram showing an example of the label format according to the embodiment.

FIG. 5 shows a label format Fa. The label format Fa includes label elements Ra and Rb and a bar code area Ara. The label format Fa is a label format that can be identified by the label format name "Fa". The label element Ra is a label element that can be identified by the label element name "element (a)". The label element Rb is a label element that can be identified by the label element name "element (b)". The label element "element (a)" is, for example, a label element in which the product ID is registered. The label element "element (b)" is, for example, a label element in which the price is registered.

The format information of the label format Fa includes information capable of identifying the label elements "element (a)" and "element (b)" and information in which the label element information of the label elements "element (a)" and "element (b)" is associated with each other. The format information of the label format Fa may include information capable of identifying the corresponding template. The label element information includes information capable of identifying the corresponding target area. For example, a case where the label format Fa corresponds to the template Ta will be described. The format information of the label format Fa may include the template name "Ta" of the template Ta as information capable of identifying the corresponding template. The format information of the label format Fa includes information indicating that the label element "element (a)" corresponds to the target area "area (1)" as the label element information. The format information of the label format Fa includes information indicating that the label element "element (b)" corresponds to the target area "area (2)" as the label element information. In the format information of the label format Fa, the label element "element (a)" and the target area name "area (1)" may be associated with each other. In the format information of the label format Fa, the label element "element (b)" and the target area name "area (2)" may be associated with each other.

The bar code area Ara is an area in which a bar code image is registered. The bar code image may be generated based on the information registered in the label element. In the example of FIG. 5, the bar code image generated based on the information registered in the label element "element (a)" is registered in the bar code area Ara.

The label format may include a label element in which information is registered based on the database stored in the memory 22. For example, the label format Fa may include a label element "element (c)" that registers information associated with the information registered in the label element "element (a)".

### Operation Example

A procedure of processing by the label dispensing system S will be described.

In the following description considering the image reading device 1 as a main body, the image reading device 1 may be read as the processing circuit 11. Similarly, in the description considering the label printer 2 as the main body, the label printer 2 may be read as the processing circuit 21.

The processing procedure to be described below is merely an example, and each processing may be changed if possible. In the processing procedure, each processing can be omitted or replaced according to the embodiment, and new processing can be added.

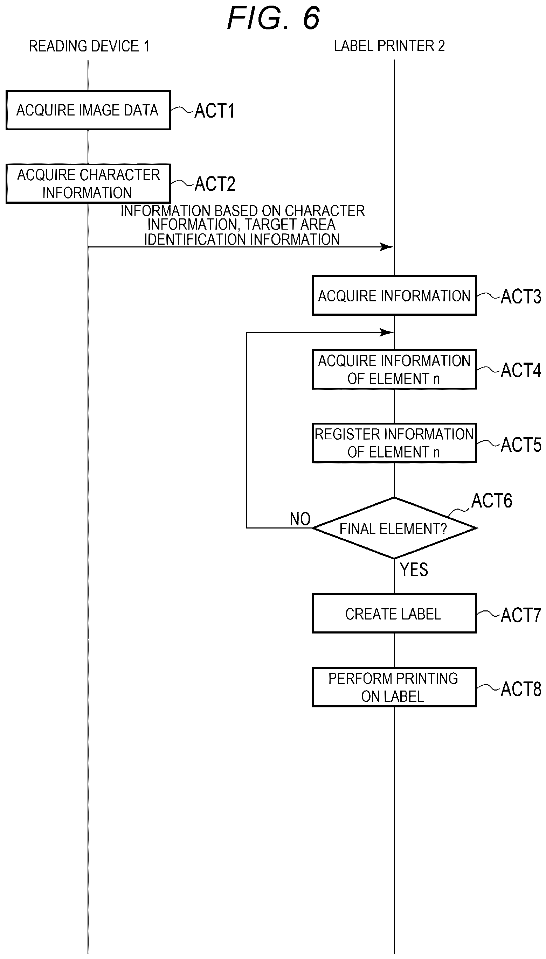

FIG. 6 is a sequence diagram showing an example of a processing procedure of information processing by the label dispensing system according to the embodiment.

In the following processing, it is assumed that the user of the image reading device 1 registers a template including a target area in the image reading device 1. The user of the label printer 2 registers the label format corresponding to the template in the label printer 2. The user of the image reading device 1 may be the same as the user of the label printer 2 or may be a separate user. The user of the image reading device 1 sets the label printer 2 as an output destination of the data.

The user of the image reading device 1 selects the template Ta to read the medium. The template Ta includes target areas "area (1)" and "area (2)". The user of the image reading device 1 sets, for example, A4 size paper in the automatic document feeding device 310 of the image reading device 1. The user of the label printer 2 selects the label format Fa corresponding to the template Ta. The label format Fa includes label elements "element (a)" and "element (b)". The label element "element (a)" is associated with the target area "area (1)" of the template Ta. The label element "element (b)" is associated with the target area "area (2)" of the template Ta.

The following processing is repeated every time the medium set in the automatic document feeding device 310 is read by the scanner unit 300. The medium may be read by the scanner unit 300 without using the automatic document feeding device 310.

The processing circuit 11 of the image reading device 1 acquires the template information. This processing may be performed by the acquisition unit 110. The processing circuit 11 acquires template information of a template to be processed from the storage 13 based on the operation by the user.

The scanner unit 300 of the image reading device 1 reads the image on the medium.

The processing circuit 11 of the image reading device 1 acquires the image data of the target area from the image data of the medium (ACT 1). The processing in ACT 1 may be performed by the acquisition unit 110. In ACT 1, for example, the processing circuit 11 specifies a target area from the image data of the medium based on the template information. The processing circuit 11 acquires image data provided in the specified target area. In this example, the processing circuit 11 specifies the target areas "area (1)" and "area (2)" from the image data of the medium. The processing circuit 11 acquires image data provided in the target areas "area (1)" and "area (2)".

The processing circuit 11 of the image reading device 1 acquires character information from the image data provided in the target area (ACT 2). The processing in ACT 2 may be performed by the character recognition unit 111. In ACT2, for example, the processing circuit 11 recognizes character information from the image data provided in the target area. The processing circuit 11 performs character recognition processing such as OCR processing on the image data provided in the target area. In this example, the processing circuit 11 performs the character recognition processing on the image data provided in the target areas "area (1)" and "area (2)". The processing circuit 11 stores character information obtained as a result of the character recognition processing and target area identification information in association with each other in the storage 13. The character information is an example of information based on the character information. For example, the processing circuit 11 acquires the character information "XXXXX" as a result of the character recognition processing of the image data of the target area "area (1)". The processing circuit 11 acquires character information of "YYYYY" as a result of the character recognition processing of the image data of the target area "area (2)". The processing circuit 11 stores the target area "area (1)" and the character information "XXXXX" in association with each other in the storage 13. The processing circuit 11 stores the target area "area (2)" and the character information "YYYYY" in association with each other in the storage 13.

The processing circuit 11 may perform key code conversion on the character information obtained as a result of the character recognition processing. In this case, the processing circuit 11 stores the key code obtained as a result of the key code conversion in the storage 13 in association with the target area identification information. The key code is an example of the information based on the character information. For example, the processing circuit 11 acquires a value obtained by performing the key code conversion on the character information "XXXXX". The processing circuit 11 acquires a value obtained by performing the key code conversion on the character information "YYYYY". The processing circuit 11 stores, in the storage 13, the target area "area (1)" and the value obtained by performing the key code conversion on the character information "XXXXX" in association with each other. The processing circuit 11 stores, in the storage 13, the target area "area (2)" and the value obtained by performing the key code conversion on the character information "YYYYY" in association with each other.

The processing circuit 11 of the image reading device 1 outputs, to the label printer 2, information in which the target area identification information is associated with the information based on the character information. This process may be performed by the output unit 112.

The processing circuit 21 of the label printer 2 acquires the information based on the character information and the target area identification information of the target area corresponding to the character information from the image reading device 1 (ACT 3). The processing in ACT 3 may be performed by the acquisition unit 210. In this example, the processing circuit 21 acquires information in which the target area name of the target area "area (1)" is associated with the information based on the character information of the target area "area (1)". The processing circuit 21 acquires information based on the target area name of the target area "area (2)" and the character information of the target area "area (2)". The processing circuit 21 stores the acquired information in the memory 22.

The processing circuit 21 of the label printer 2 acquires the information based on the character information corresponding to the label element from the memory 22 based on the label format (ACT 4). The processing in ACT 4 may be performed by the acquisition unit 210. In ACT 4, for example, the processing circuit 21 acquires the label format based on the operation by the user. The processing circuit 21 specifies the target area associated with the label element provided in the label format. The processing circuit 21 inquires of the memory 22 about information based on character information associated with the specified target area. The processing circuit 21 acquires information based on the character information corresponding to the inquired label element.

For example, a case where a label element n is the "element (a)" will be described. The processing circuit 21 specifies target area identification information ("area (1)") of a target area associated with the label element "element (a)". The processing circuit 21 inquires of the memory 22 about information based on character information associated with the target area "area (1)". The processing circuit 21 acquires information based on the character information associated with the target area "area (1)" from the memory 22.

The processing circuit 21 acquires information based on character information for each label element provided in the label format.

When the target area identification information acquired from the image reading device 1 includes information capable of identifying the template, the processing circuit 21 may specify the label format corresponding to the template based on the target area identification information.

The processing circuit 21 of the label printer 2 registers the information based on the character information corresponding to the label element in the label element (ACT 5). The processing in ACT 5 may be performed by the label element registration unit 211. For example, the case where the label element n is the "element (a)" will be described. The processing circuit 21 registers the information based on the character information corresponding to the label element "element (a)" in the label element "element (a)".

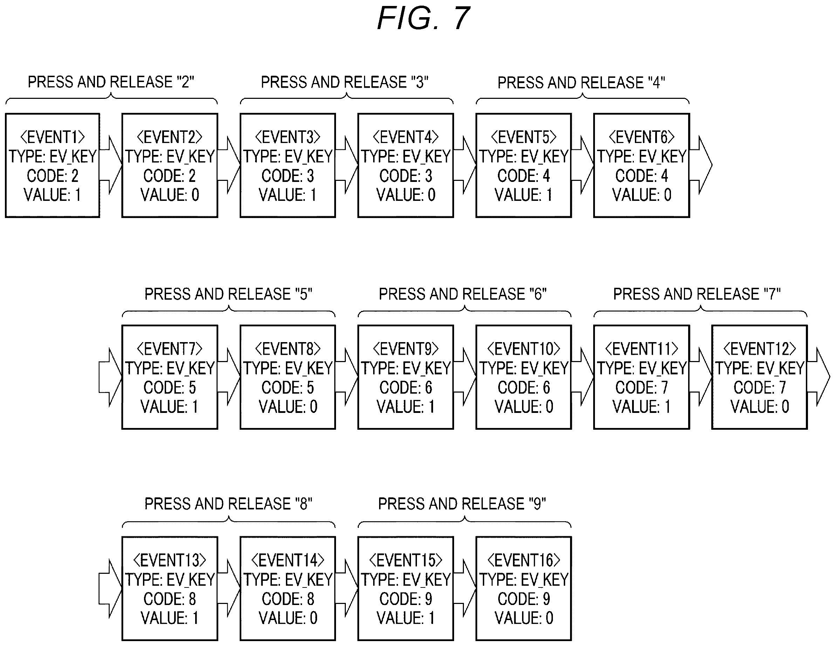

As a specific example, a case where the processing circuit 21 acquires a value obtained by performing the key code conversion on the character information as the information based on the character information will be described. The processing circuit 21 generates a key event based on the key code corresponding to the label element "element (a)". The occurrence of a key event will be described with reference to FIG. 7. FIG. 7 is a diagram showing an example of a processing procedure of key event generation processing by the label printer 2 according to the embodiment. In the example of FIG. 7, key codes corresponding to the label element "element (a)" are "2, 3, 4, 5, 6, 7, 8 and 9". The processing circuit 21 sequentially generates a key event for each of the key codes. The processing circuit 21 acquires the key event. For example, as shown in FIG. 7, the processing circuit 21 generates a key event in which one character is input in an event of pressing a key and an event of releasing the key. The processing circuit 21 registers a value in the label element "element (a)" based on the acquired key event. The processing circuit 21 sequentially registers the values "2, 3, 4, 5, 6, 7, 8 and 9" in the label element "element (a)".

The processing circuit 21 registers information based on corresponding character information for each label element provided in the label format. The processing circuit 21 may store the registered information in the memory 22 in association with the label element.

The processing circuit 21 of the label printer 2 determines whether the label element provided in the label format is a final element (ACT 6). The processing in ACT 6 may be performed by the acquisition unit 210. In ACT 6, for example, the processing circuit 21 determines whether there is a label element in a registration waiting state of the information based on the character information. When there is no label element in the registration waiting state, the processing circuit 21 determines that the label element is the final element. When there is a label element in the registration waiting state, the processing circuit 21 determines that the label element is not the final element. If the label element is the final element (ACT 6: YES), the processing transitions from ACT 6 to ACT 7. When the label element is not the final element (ACT 6: NO), the processing transitions from ACT 6 to ACT 4.

The processing circuit 21 of the label printer 2 creates a label based on the information registered in the label element (ACT 7). The processing in ACT 7 may be performed by the label creation unit 212. In ACT 7, for example, the processing circuit 21 creates a label in which the information based on the character information is registered in the label element based on the label format. The processing circuit 21 may store the label information of the created label in the memory 22. The processing circuit 21 outputs the label information to the printing device 26.

The processing circuit 21 of the label printer 2 controls the printing device 26 to perform printing on the label based on the label information (ACT 8). In ACT 8, for example, the processing circuit 21 prints an image based on the label information on the label. The image based on the label information includes, for example, a product ID, a price, and a code symbol. The processing circuit 21 may control the printing device 26 to print the image based on the label information on a plurality of labels. In this case, the label information may include information indicating the number of printed labels. The processing circuit 21 may control the printing device 26 to print an image including information indicating the number of labels to be printed. For example, when the number of printed labels is five, the information indicating the number of labels may be numerals from "1" to "5".

According to this example, the image reading device 1 can recognize the character information from the target area of the image on the medium read by a scanner, associate the information capable of identifying the target area with the information based on the character information, and output the associated information to the label printer 2. For example, by reading the medium with the scanner and acquiring the character information of the target area, the image reading device 1 can output the information capable of identifying the target area and the information based on the character information to the label printer 2 in association with each other. The user can print appropriate information on the label by the label printer 2 only by an operation of scanning the medium. Further, for example, even when there are a plurality of target areas, the image reading device 1 can easily output the information of the plurality of target areas to the label printer 2 by outputting the information capable of identifying the target area and the information based on the character information in association with each other to the label printer 2. Accordingly, the label dispensing system can facilitate label dispensing.

The label printer 2 can acquire the information capable of identifying the target area and the information based on the character information. Therefore, the label printer 2 can acquire the information based on the character information corresponding to the label element based on the information capable of identifying the target area of the image on the medium and register the information in the label element. For example, the label printer 2 can print information corresponding to the label element on the label based on the information obtained by reading the medium with the scanner in the image reading device 1. The user can print appropriate information on the label by the label printer 2 only by scanning the medium in the image reading device 1. Further, for example, even when there are a plurality of label elements, the label printer 2 can easily register information in the label elements based on the information acquired from the image reading device 1. Accordingly, the label dispensing system can facilitate label dispensing.

The image reading device (reader) 1 stores the template in which a target area is associated with information capable of identifying the target area. Accordingly, the user of the image reading device 1 can select a pattern of the target area in which the character information is recognized from the template. The image reading device 1 can easily specify the target area in which the character information is recognized based on the template. Accordingly, the label dispensing system can facilitate label dispensing.

The label printer 2 stores a label format in which information capable of identifying a label element is associated with information capable of identifying the target area. Thus, the user of the label printer 2 can create a label including information based on the character information of the target area corresponding to the label element by selecting the label format. The label printer 2 can easily register the information based on the character information corresponding to the label element based on the label format. Accordingly, the label dispensing system can facilitate label dispensing.

An example of connection of the label dispensing system S will be described.

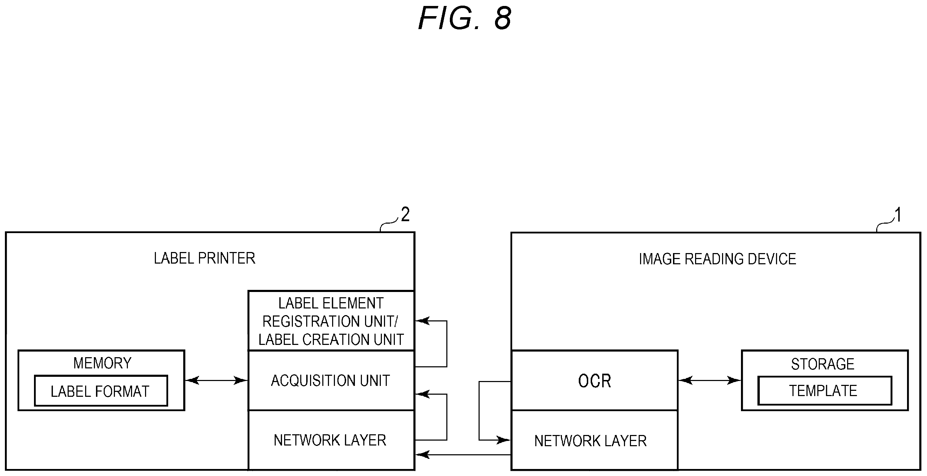

FIG. 8 is a block diagram showing the example of the connection of the label dispensing system S according to the embodiment.

In the example of FIG. 8, the image reading device 1 and the label printer 2 are communicably connected to each other via the network.

In this example, the label printer 2 acquires the information based on the character information and the target area name from the image reading device 1 via the network. The processing circuit 21 passes the character information of the target area corresponding to the label element requested by the label element registration unit 211 to the label element registration unit 211. Alternatively, the processing circuit 21 internally generates the key event.

The label element registration unit 211 registers the passed character information in the label element. Alternatively, the label element registration unit 211 reads the key event and registers the key event in the label element.

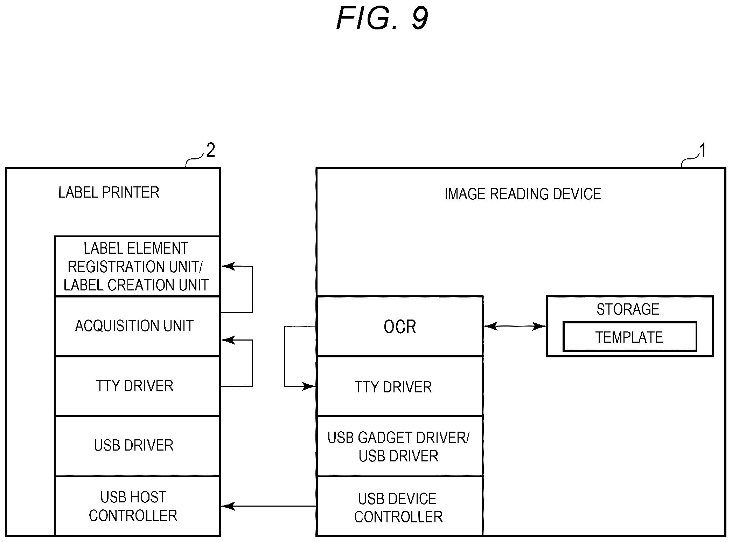

FIG. 9 is a block diagram showing another example of the label dispensing system S according to the embodiment.

In the example of FIG. 9, the image reading device 1 and the label printer 2 are communicably connected to each other via a universal serial bus (USB) cable or the like.

In this example, the label printer 2 acquires the information based on the character information and the target area name from the image reading device 1 via the USB cable or the like. The acquisition unit 210 reads the received data. The processing circuit 21 passes the character information of the area corresponding to the label element requested by the label element registration unit 211 to the label element registration unit 211. Alternatively, the processing circuit 21 internally generates a key event.

The label element registration unit 211 registers the passed character information in the label element. Alternatively, the key event is read and registered in the label element.

### Modification

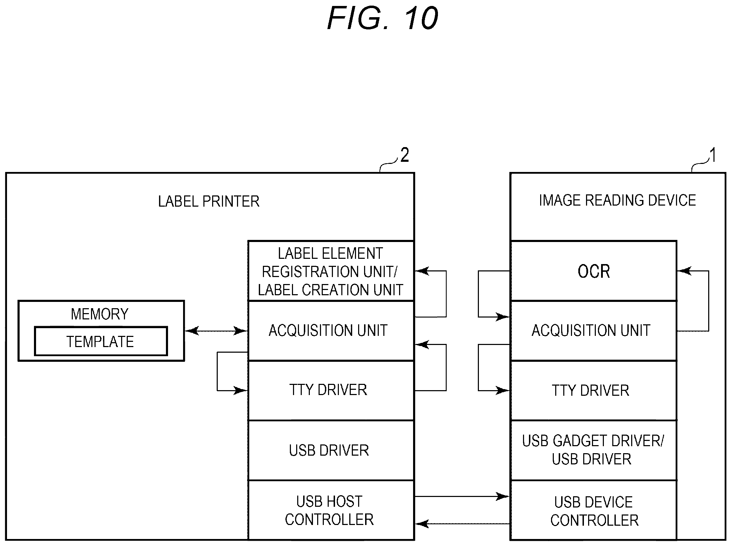

FIG. 10 is a block diagram showing a modification of the label dispensing system S according to the embodiment.

In the example of FIG. 10, the acquisition unit (receiver) 210 of the label printer 2 requests the character information of the target area corresponding to the label element for the image reading device 1. In this example, it is assumed that the memory 22 of the label printer 2 stores a template in which label elements and information indicating a target area are associated with each other.

For example, the processing circuit 21 outputs information indicating the target area corresponding to the label element to the image reading device 1 based on the template. The processing circuit 11 (the acquisition unit 110) of the image reading device 1 acquires information indicating the target area. The processing circuit 11 (character recognition unit 111) acquires the character information from the image data provided in the target area. The processing circuit 11 performs, for example, character recognition by character recognition processing such as OCR processing from the image data provided in the target area. The processing circuit 11 may convert the character information into a value such as a numerical value. The processing circuit 11 may perform key code conversion based on the character information. The processing circuit 11 (the output unit 112) outputs information based on the character information of the target area to the label printer 2. The information based on the character information is, for example, a value obtained by performing the key code conversion on the character information.

The processing circuit 21 of the label printer 2 acquires information based on the character information. The processing circuit 21 passes the character information of the area corresponding to the label element requested by the label element registration unit 211 to the label element registration unit 211. Alternatively, the processing circuit 21 internally generates a key event.

The label element registration unit 211 registers the passed character information in the label element. Alternatively, the key event is read and registered in the label element.

According to this example, the image reading device 1 can acquire the information based on the character information corresponding to the target area requested from the label printer 2 and output the information to the label printer 2. Accordingly, the image reading device 1 can provide the label printer 2 with the information based on the character information corresponding to the target area without storing the information of the template. The user can print appropriate information on the label by the label printer 2 only by the operation of scanning the medium. Accordingly, the label dispensing system can facilitate label dispensing.

### Other Embodiments

A reading device may be implemented by one electronic device such as the image reading device 1 or by a plurality of electronic devices in which functions are distributed. A label dispensing device may be implemented by one electronic device such as the label printer 2 or by a plurality of electronic devices in which functions are distributed.

The printer unit 700 was described as a printer unit using a tandem-type toner image transfer unit, but is not limited thereto. The printer unit 700 may be an inkjet type printer unit.

The above-described embodiment may be applied to a method executed by a device. The above-described embodiment may be applied to a program enabling a computer of a device to execute each function. The above-described embodiment may be applied to a recording medium that stores a program.

Each of one or more circuits constituting the processing circuit executes one or more processing among the plurality of pieces of processing. When the processing circuit is implemented by a single circuit, the single circuit executes all of the plurality of pieces of processing. When the processing circuit is implemented by a plurality of circuits, each of the plurality of circuits executes some of the plurality of pieces of processing. Some of the plurality of pieces of processing may be one of the plurality of pieces of processing, or may be two or more of the plurality of pieces of processing. When the processing circuit includes a plurality of circuits, the plurality of circuits may be included in one device or may be distributed among a plurality of devices.

The program may be transferred in a state of being stored in a device according to at least one embodiment, or may be transferred in a state of not being stored in the device. In the latter case, the program may be transferred via a network or may be transferred in a state of being stored in a recording medium. The recording medium is a non-transitory tangible medium. The recording medium is a computer-readable medium. A form of the recording medium is not limited as long as the recording medium is a medium that can store a program and can be read by a computer, such as a CD-ROM or a memory card.

While certain embodiments have been described, these embodiments have been presented by way of example only, and are not intended to limit the scope of the exemplary embodiments. These novel embodiments can be implemented in various other forms, and various omissions, substitutions, and modifications can be made without departing from the scope of the disclosure as defined by the appended claims. The embodiments and the modifications thereof are included in the scope of the disclosure, and are included in a scope of the invention disclosed in the claims and equivalents thereof.

### Appendix

The above-described embodiment can be configured as follows.
(1) A reading device including:
   a scanner section configured to read an image on a medium;
   a character recognition unit configured to recognize character information from a target area of the image on the medium read by the scanner section; and
   an output unit configured to output information in which information capable of identifying the target area and information based on the character information are associated with each other.
(2) The reading device according to (1), further including:
   a storage unit configured to store a template in which the information capable of identifying the target area and the information related to the target area are associated with each other.
(3) A label dispensing device including:
   an acquisition unit configured to acquire, from a reading device, information in which information based on character information and information capable of identifying a target area of an image on a medium corresponding to the character information are associated with each other;
   a label element registration unit configured to register information based on the character information corresponding to a label element; and
   a label creation unit configured to create a label based on the information registered by the label element registration unit.
(4) The label dispensing device according to (3), further including:
   a storage unit configured to store a label format in which the label element and information capable of identifying the target area are associated with each other.
(5) An information processing method including:
   recognizing character information from a target area of an image on a medium read by a scanner section; and
   outputting information capable of identifying the target area and information based on the character information.
(6) An information processing method including:
   acquiring, from a reading device, information in which information based on character information is associated with information capable of identifying a target area of an image of a medium corresponding to the character information;
   registering the information based on the character information corresponding to a label element; and
   creating a label based on the registered information.
(7) A reading device including:
   a scanner section configured to read an image on a medium;
   an acquisition unit configured to acquire information indicating a target area of the image on the medium;
   a character recognition unit configured to recognize character information from the target area of the image on the medium read by the scanner section; and
   an output unit configured to output information based on the character information of the target area.

## Claims

1. A reading device comprising:
a scanner configured to read an image on a medium;
a processor configured to
perform character recognition to recognize character information from a target area of the image of the medium read by the scanner; and
output information, the output information including information identifying the target area and information based on the character information associated with each other.

2. The device according to claim 1, further comprising:
a storage configured to store a template in which the information identifying the target area and the information related to the target area are associated with each other.

3. A label dispensing device comprising:
a processor configured to
acquire, from a reader, information including information based on character information and information identifying a target area of an image on a medium corresponding to the character information associated with each other;
register label element information based on the character information corresponding to a label element; and
create a label based on the registered label element information.

4. The device according to claim 3, further comprising:
a storage configured to store a label format in which the label element and information identifying the target area are associated with each other.

5. An information processing method comprising:
recognizing character information from a target area of an image on a medium read by a scanner; and
outputting information identifying the target area and information based on the character information.

6. An information processing method comprising:
acquiring, from a reader, information including information based on character information associated with information identifying a target area of an image on a medium corresponding to the character information;
registering the information based on the character information corresponding to a label element; and
creating a label based on the registered information.

7. A reading device comprising:
a scanner configured to read an image on a medium; and
a processor configured to
acquire information indicating a target area of the image on the medium;
recognize character information from the target area of the image on the medium read by the scanner; and
an output configured to output information based on the character information of the target area.

8. The device according to claim 1, wherein the reading device includes a multifuction peripheral.

9. The device according to claim 1, wherein the scanner includes a line sensor.

10. The device according to claim 1, wherein the information based on the character information includes numerical values.

11. The device according to claim 2, wherein the storages includes at least one of a hard disk drive or a solid state drive.

12. The device according to claim 3, wherein the label creation section includes a label dispenser.

13. The device according to claim 4, wherein the label format includes format identification information.
